# EUROPEAN PATENT APPLICATION

(11) **EP 2 983 411 A1**
(43) Date of publication of application: **10.02.2016**
(21) Application number: 15179933.5
(22) Date of filing: 06.08.2015
(51) Int. Cl.: H04W 48/08, H04W 48/10, H04W 48/12, H04W 48/14, H04W 12/06, H04W 88/06, H04W 48/20

(54) **METHOD OF ACCESS NETWORK DETECTION AND SELECTION**

(30) Priority: 07.08.2014 US 201462034178 P; 05.08.2015 US 201514818312
(71) Applicant: Acer Incorporated, New Taipei City 221 (TW)
(72) Inventor: Pao, Wei-Chen, 221 New Taipei City (TW); Cheng, Ching-Wen, 221 New Taipei City (TW)
(74) Representative: Becker Kurig Straus

(57) **Abstract**

A method of access WiFi network detection and selection assisted by a wireless cellular communication system is disclosed. The method comprises a a radio access node configuring a communication device of the wireless communication system to report periodically or by trigger the list of WLAN IDs and related information (e.g., signal strength, frequency channel, operation mode) in its vicinity; the communication device sends such a report to the radio access node and the radio access node provides, through dedicated or broadcast signalling, radio access network (RAN) assistance information that includes a plurality of WLAN ID, priority, and WLAN information, wherein the WLAN information includes at least one of frequency, available bandwidth, channel, operator ID, trusted/untrusted WLAN, capability of S2a supporting, Venue, and WLAN operation mode. Then, the communication device prioritizes the WLANs and selects a WLAN to associate with.

## Description

### Field of the Invention

The present invention relates to a method used in a communication device in a wireless communication system, and more particularly, to a method of access network detection and selection.

### Background of the Invention

3GPP in Release 11 proposes access network discovery and selection function management object (ANDSF MO) to manage Inter-System Mobility Policy (ISMP) and Inter-System Routing Policy (ISRP) as well as access network discovery information stored in a user equipment (UE) supporting provisioning of such information from an ANDSF, which is a network element providing access network discovery and selection assistance data as per operators' policy. In a word, ANDSF provides information containing access network discovery and selection information as well as the traffic routing information to assist the UE with selecting the access network (e.g. a wireless local area network (WLAN)) to control and assist the UE with performing the inter-system change or to assist the UE with determining how to route IP traffics or all of the above mentioned.

In practice, the ANDSF of a Public Land Mobile Network (PLMN) sends an ANDSF MO indicating a WLAN ID list, such as Service Set Identifier (SSID) for identifying one WLAN from another, to the UE. The UE determines whether to use a WLAN according to the WLAN ID list. For example, when the UE moves in the coverage of an eNB, wherein plurality of WLAN access points (APs) are deployed in the coverage of the eNB, the UE could be aware of the existing of a WLAN AP by a SSID broadcasted by the WLAN AP. If the broadcasted SSID is the SSID indicated in the WLAN ID list, the UE selects the WLAN AP. Note that, the information obtained from the ANDSF MO is sent by a radio access network (RAN), a part of a mobile communication system which includes radio access nodes, such as eNB, WiFi access points that implement at least one radio access technology (i.e. LTE or WiFi) to provides radio communication services to UEs.

However, the applicant notices a problem of that the WLAN ID list is provided by broadcasted signaling. There is no differentiation for UEs to use the list of WLAN IDs (namely all UEs in the same coverage of the eNB use the same information). Consequently, the UE detects WLAN APs blindly for all frequencies, available bandwidths, and channels. The UE may spend time to find a suitable WALN AP whether the UE can successfully associate with. As a result, the UE behavior for finding a suitable WLAN AP consumes power.

### Summary of the Invention

The application aims at providing a method of network detection and selection in order to solve the abovementioned problem.

This is achieved by a method of network detection and selection according to claims 1 and 10. The dependent claims pertain to corresponding further developments and improvements.

As will be seen more clearly from the detailed description following below, the claimed method of network detection and selection for a radio access node in a wireless communication system to provide information to assist at least one communication devices in access network detection and selection. The method comprises providing a radio access network (RAN) assistance information including a plurality of WLAN ID, priority, and WLAN information to a communication device of the wireless communication system, wherein the WLAN information includes at least one of frequency, available bandwidth, channel, operator ID, trusted/untrusted WLAN, capability of S2a supporting, Venue, and WLAN operation mode.

### Brief Description of the Drawings

FIG. 1 is a schematic diagram of a wireless communication system.
FIG. 2 is a schematic diagram of an exemplary communication device.
FIG. 3 is a flowchart of an exemplary process according to the present disclosure.
FIG. 4 is a schematic diagram of a RAN assistance information transmission according to the present disclosure.
FIGs. 5-8 are schematic diagrams of an access network detection and selection operation according to the present disclosure.
FIG. 9 is a flowchart of an exemplary process according to the present disclosure.
FIGs. 10-20 are schematic diagrams of an access network detection and selection operation according to the present disclosure.

### Detailed Description

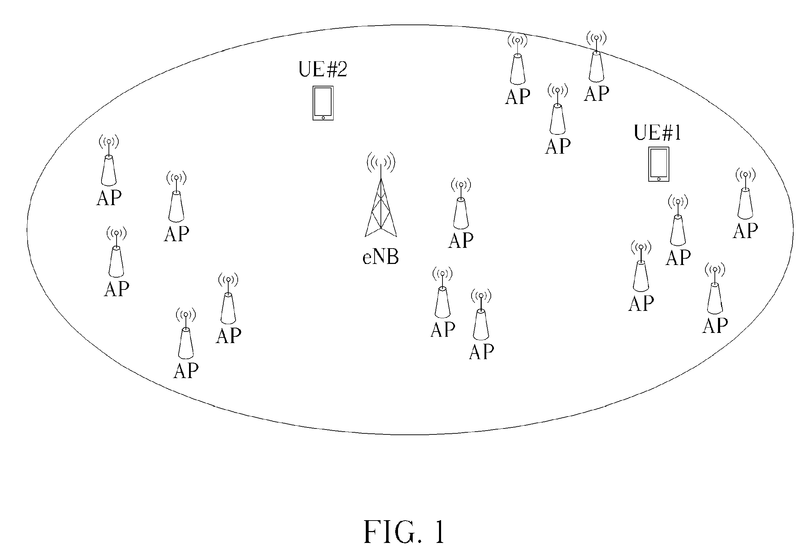

Please refer to Fig. 1, which is a schematic diagram of a wireless communication system. The wireless communication system is a LTE system or other mobile communication systems, and is briefly composed of at least one user equipment (UEs), a radio access node, and plurality of WLAN access points (APs) deployed in the coverage of the radio access node. The UEs served by the radio access node detects WLAN APs for 3GPP/WLAN Integration. Note that, Fig. 1 is simply utilized for illustrating the structure of the wireless communication system, where the number of UEs, eNBs, and WLAN APs are not limited herein. The radio access node can be network elements such as eNB, Node B, base transceiver station (BTS), etc. The UEs can be devices such as mobile phones, computer systems, machine type devices, etc. Besides, the eNB and the UE can be seen as a transmitter or receiver according to transmission direction, e.g., for uplink (UL), the UE is the transmitter and the eNB is the receiver, and for downlink (DL), the eNB is the transmitter and the UE is the receiver.

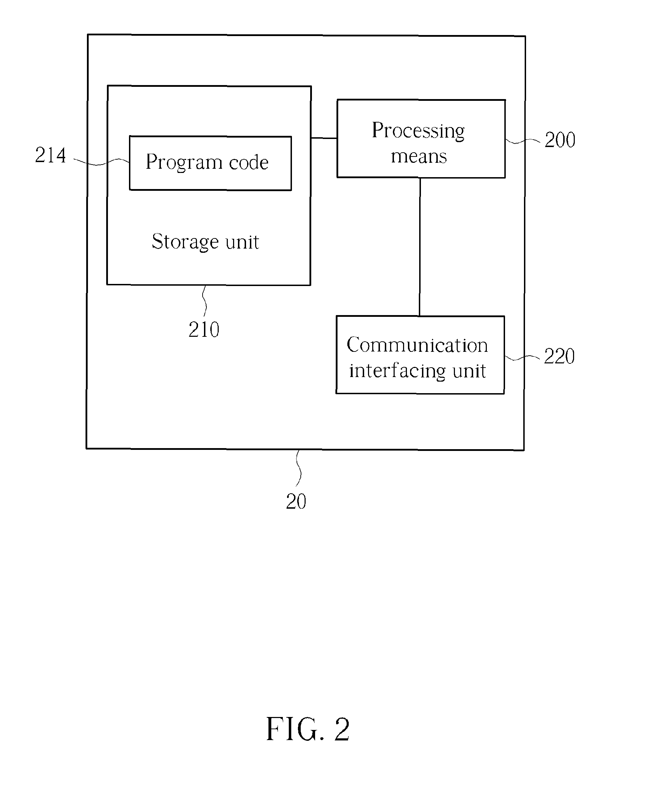

Fig. 2 is a schematic diagram of an exemplary communication device 20. The communication device 20 can be the UE or eNB shown in Fig. 1. The communication device 20 may include a processing means 200 such as a microprocessor or Application Specific Integrated Circuit (ASIC), a storage unit 210 and a communication interfacing unit 220. The storage unit 210 may be any data storage device that can store program code 214, for access by the processing means 200. Examples of the storage unit 210 include but are not limited to a subscriber identity module (SIM), read-only memory (ROM), flash memory, random-access memory (RAM), CD-ROMs, magnetic tape, hard disk, and optical data storage device. The communication interfacing unit 220 is preferably a radio transceiver and can exchange wireless signals with a network node (i.e. an eNB or EPC) or a communication device (i.e. an UE) according to processing results of the processing means 200.

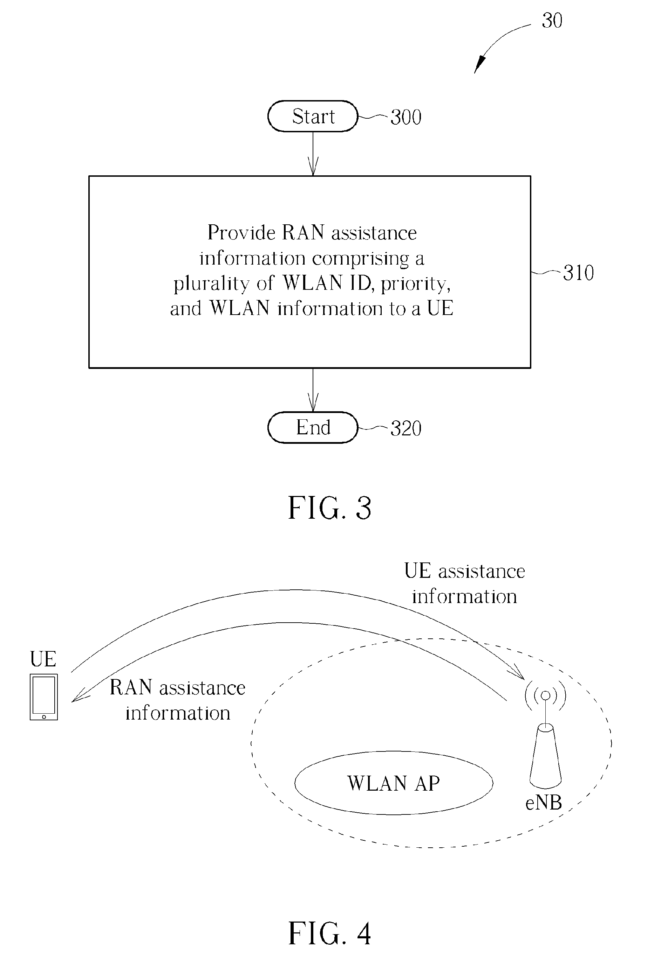

Please refer to Fig. 3, which is a flowchart of a process 30 according to an example of the present disclosure. The process 30 is utilized in the eNB of Fig. 1 for network detection and selection. The process 30 may be compiled into a program code 214 to be stored in the storage unit 210, and may include the following steps:

| | |
|---|---|
| Step 300: | Start. |
| Step 310: | Provide a radio access network (RAN) assistance information including a WLAN ID list and a WLAN information to a UE, wherein the WLAN information includes at least one of frequency, available bandwidth, channel, operator ID, trusted/untrusted WLAN, capability of S2a supporting, Venue, WLAN operation mode. |
| Step 320: | End. |

According to the process 30, the network provides not only the WLAN ID list, but also the WLAN information to the UE, wherein the WLAN information includes at least one of frequency, available bandwidth, channel, operator ID, trusted/untrusted WLAN, capability of S2a interface supporting, Venue (e.g. Assembly, Educational, Factory and Industrial, Business, and etc.), WLAN operation mode (e.g. 802.11c/g/n/u/ac). In a word, the present invention provides additional information from the eNB to the UE, and thereby the UE can discover and select an appropriate WLAN AP according to the addition information with reduced power consumption in WLAN AP detection (i.e. the UE detects only channels indicated in the WLAN information of the RAN assistance information) and with reduced time in network detection and selection. For example, with additional information, namely WLAN information, it is avoided that UE attempts to associate with a WLAN AP that the UE won't be able to be successfully authenticated.

In addition, the RAN assistance information may be provided by a broadcasted signaling, e.g. SIB, paging (for the UE to receive SIB) or by a dedicated signaling, e.g. a new message, RRCConnectionReconfiguration, LoggedMeasurementConfiguration, or Measurement Control. The WLAN ID list may be provided with priority and includes SSID, BSSID, HESSID, ESSID. Moreover, the WLAN information may include other information, e.g. speedStatePars (UE shall not select WLAN when move in speed), timeToTrigger-SP (related to speedStatePars), and QuantityConfig (signal strength filtering).

Note that, the elements of the WLAN information could be separated into mandatory and optional parameters. For example, the trusted/untrusted WLAN (e.g., depending on whether the S2a interface is supported or not, or depending on the configuration of the network operator) may be useful information for the UE to select among multiple WLANs. The indication of the trusted/untrusted WLAN may be the mandatory element of WLAN information. Other elements in WLAN information may be optional. Take another example that the operator ID could be useful for the UE to evaluate whether the UE can successfully associate with the WLAN AP. In that case, operator ID could be the mandatory element of the WLAN information, and other elements in WLAN Information may be optional.

Please refer to Fig. 4, which is a schematic diagram of a RAN assistance information transmission. The eNB provides the RAN assistance information to the UE, and therefore the UE can select or re-select a WLAN AP from a WLAN ID list provided in the RAN assistance information given by the eNB. Note that, the RAN assistance information may be provided based on at least one of the following: UE characteristics (e.g., UE subscription information, UE location, UE assistance information, etc.) and WLAN information. Thus, the eNB can generate a WLAN ID list that is suitable for the UE. For example, the eNB selects WLAN APs in the vicinity of a specific UE. Or, the eNB selects WLAN APs regarding to UE's characteristics (e.g. subscriber class of the UE). In Fig. 4, the UE provides a UE assistance information to the network to assist the eNB in generating a WLAN ID list that are suitable for the UE (e.g. the eNB generates a WLAN ID list of the WLAN APs that are close to the UE.) by periodical signaling, e.g. a new message, Measurement Report, or by event triggered signaling, e.g. a new message, event-triggered reports that are configured by the eNB for the UE to send logged information when a UE changing from RRC_IDLE to RRC_CONNECTED state, or a MDT measurement report.

As abovementioned, the RAN assistance information provided by the eNB is not always the same to every UEs since the eNB generates the RAN assistance information based on UE's location and /or UE characteristics. Thus, the UE performs access network detection and selection more efficiency according to the RAN assistance information.

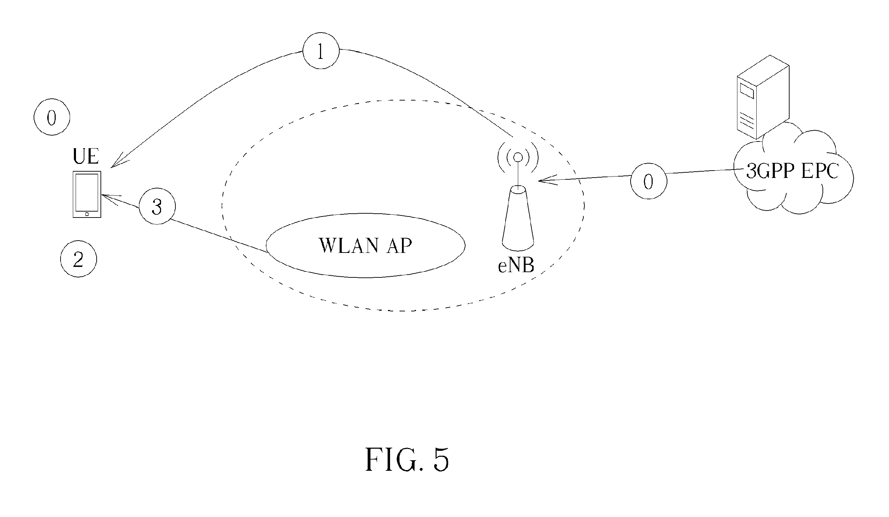

Some examples based on the process 30 are here described. Figs. 5-6 are schematic diagrams of an access network detection and selection operation. The eNB may obtain WLAN information from the 3GPP EPC or collect WLAN information by the eNB (step 0), e.g., by passively receiving the WLAN information given from 3GPP EPC, or by sending an indication from eNB to the 3GPP EPC to enquire the WLAN information. Meanwhile, the UE stores a history of visited WLAN APs, wherein the history information stored by the UE may include the WLAN IDs, operator ID, frequency, available bandwidth, and channel of the visited WLAN Aps (step 0). The eNB provides broadcasted RAN assistance information to UE (step 1). The broadcasted RAN assistance information may include one or more lists of the sets of the WLAN ID of a WLAN AP, the priority associated with the WLAN AP. After receiving the broadcasted RAN assistance information, the UE prioritizes the WLAN IDs to associate with, by referencing the history of visited WLAN APs as well as the user preference if configured in the UE (step 2). Finally, the UE receives the broadcasted information from WLAN APs and selects a WLAN AP to associate with based on UE prioritized WLAN IDs (step 3).

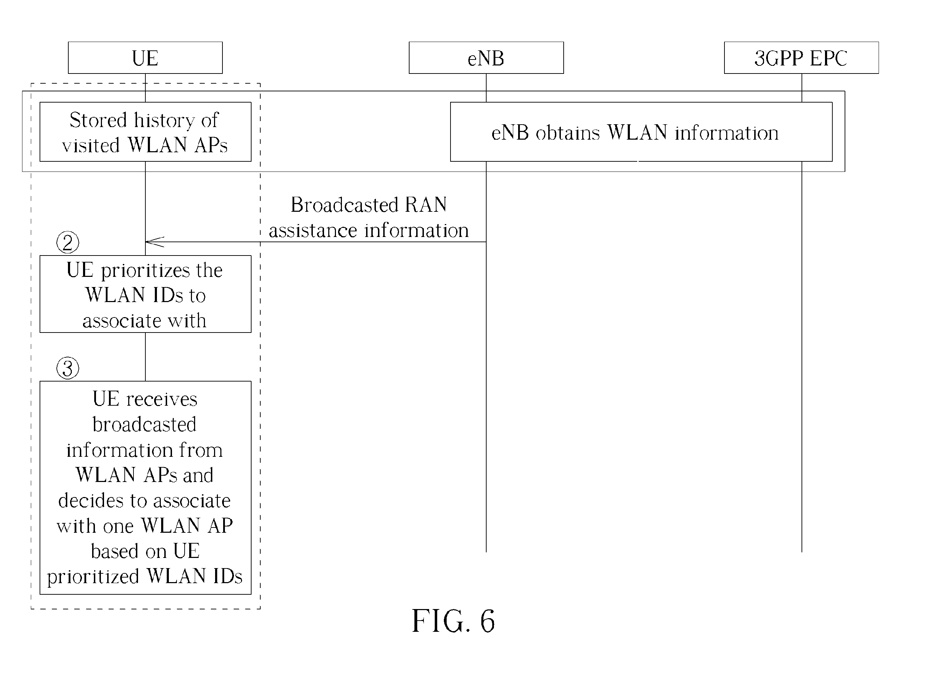

For more detailed description, please refer to Fig. 6, which illustrates behaviors of a 3GPP EPC, a UE and an eNB. In Fig. 6, the eNB obtains WLAN information including frequency, available bandwidth, channel, operator ID, indication of trusted/untrusted WLAN, indication of the capability of S2a supporting, Venue, WLAN operation mode, from the 3GPP EPC or by the eNB collection. The UE stores a history of visited WLAN APs. The eNB may provide the broadcasted RAN assistance information to the UE, wherein the broadcasted RAN assistance information may include WLAN ID, priority and WLAN Information. The UE prioritizes the WLAN IDs to associate with, by referencing the history of visited WLAN APs as well as the user preference if available. Finally, the UE receives the broadcasted information from WLAN APs and selects a WLAN AP to associate with based on UE prioritized WLAN IDs.

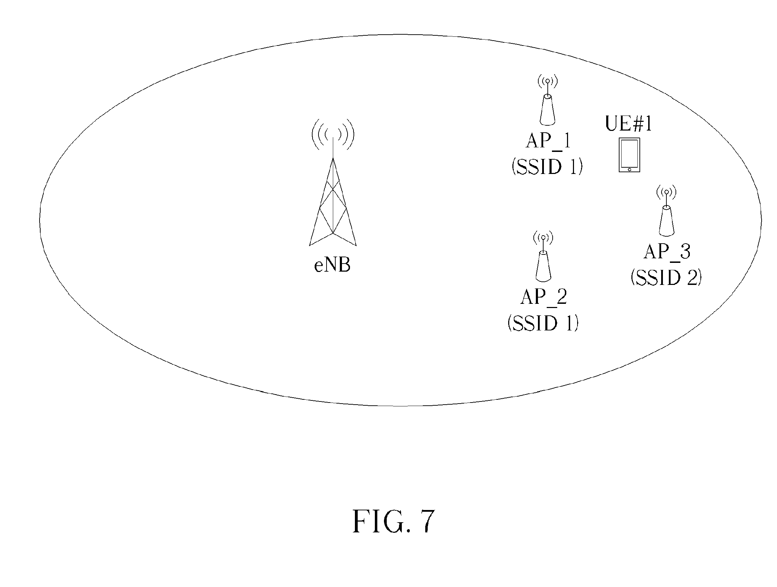

In an embodiment, as shown in Fig. 7, different WLAN APs may share the same WLAN ID (e.g. SSID, HESSID) but possess different capabilities (e.g. act as a trusted WLAN with supporting S2a interface) and operate in different WLAN operation modes (e.g. 802.11c/g/n/u/ac). For example, the UE_1 is the subscriber of PLMN_1. WLAN AP AP_1 (identified by SSID_1) is deployed by PLMN_1 with venue category "Assembly" and operates at 802.11c as a trusted WALN with supporting S2a (i.e., WLAN APAP_1 is a trusted WLAN of PLMN_1 that requires less time for the UE_1 to establish a WLAN association). On the other hand, WLAN AP AP_2 (identified by SSID_1) is deployed by PLMN_1 with venue category "Residential" and operates at 802.11c as an untrusted WLAN that requires longer time for the UE_1 to associate with. In addition, WLAN AP AP_3 (identified by SSID_2) is deployed by local WLAN operator with venue category "Unspecified" and operates at 802.11g as an untrusted WLAN. In this case, when the UE_1 receives the RAN assistance information including WLAN information (i.e. operator ID, Venue, WLAN operation mode (e.g.802.11c/g/n/u/ac), trusted/untrusted WLAN, and the capability of supporting S2a) from the eNB, the UE_1 knows how to prioritize WLAN AP AP_1- WLAN AP AP_3, and selects WLAN AP AP_1 to shorten WLAN association time to save power consumption. As can be seen, it is helpful for the eNB to provide RAN assistance information to assist UEs to reduce WLAN selection effort.

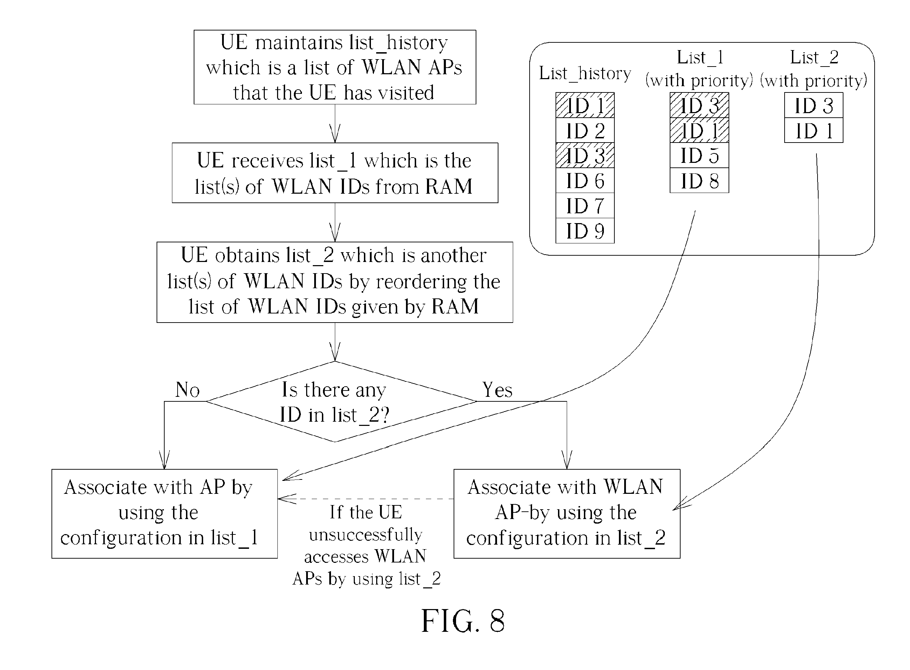

For prioritizing of WLAN APs, please refer to Figs. 6 and 8. In this embodiment, the UE maintains the List_history, which is a list of WLAN IDs that the UE has visited. The UE receives the List_1, which is a list of WLAN IDs with priority, from the RAN assistance information. The UE obtains the List_2 which is another list of WLAN IDs by reordering the list of WLAN IDs (i.e. the List_1) given by RAN assistance information. And then, the UE checks if any WLAN ID in List_2? If the List_2 is not empty, the UE selects the WLAN AP to associate with in accordance to the sequence of the WLAN IDs in the List_2. If the UE fails to associate with the selected WLAN AP, the UE selects the next WLAN ID in List_2 to associate with until tried all the WLAN APs in the List_2. Note that, if the UE fails to access WLAN APs by using List_2, the UE selects WLAN APs to associate with by using the List_1. For example, in Fig. 8, List_history in UE includes {ID1, ID2, ID3, ID6, ID7, ID9}. List_1 provided from the RAN assistance information includes {ID3/priority 1, ID1/priority 2, ID5/priority 3, ID8/priority 4}. The UE prioritizes the WLAN IDs to associate with as {ID3/priority 1, ID1/priority 2}.

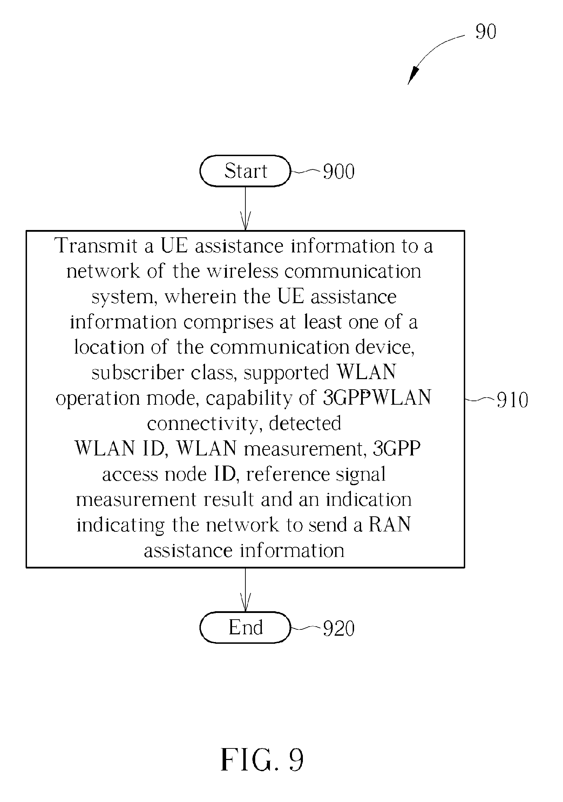

Please refer to Fig. 9, which is a flowchart of a process 90 according to an example of the present disclosure. The process 90 is utilized in the UE of Fig. 1 for network detection and selection. The process 90 may be compiled into a program code 214 to be stored in the storage unit 210, and may include the following steps:

| | |
|---|---|
| Step 900: | Start. |
| Step 910: | Transmit a UE assistance information to a network of the wireless communication system, wherein the UE assistance information comprises at least one of a location of the communication device, subscriber class, supported WLAN operation mode, capability of 3GPP/WLAN connectivity, detected WLAN ID, WLAN measurement, 3GPP access node ID, reference signal measurement result and an indication indicating the network to send a RAN assistance information. |
| Step 920: | End. |

According to the process 90, the UE provides UE assistance information to the network, to assist the eNB in generating WLAN ID list or RAN assistance information that are suitable for the UE (i.e. WLAN APs that are close to the UE).

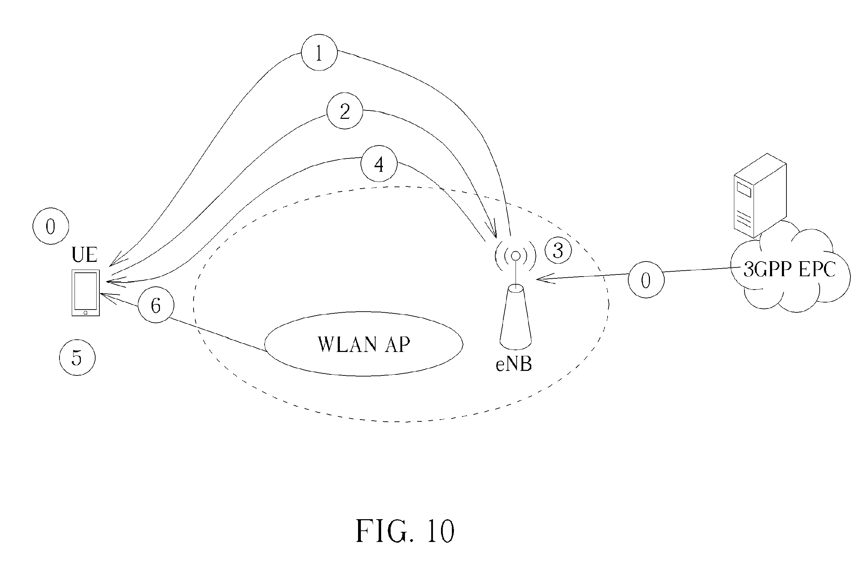

Take example based on process 90. Figs. 10-11 are schematic diagrams of an access network detection and selection operation. The eNB obtains WLAN information from 3GPP EPC or by eNB collection (step 0). Meanwhile, the UE stores a history of visited WLAN APs (step 0). The eNB indicates UE to provide UE assistance information (step 1). When events for reporting UE Report occur (e.g. UE measured RSSI less than a pre-configured threshold), UE sends the UE Report including the UE assistance information to the eNB (step 2). The eNB determines lists of WLAN IDs by using the UE assistance information of UE Report (step 3). And then, the eNB provides dedicated RAN assistance information to the UE (step 4).

The UE Report may comprise: UE information and access node information. The UE information may include location (e.g GPS information, OTDOA), subscriber class (e.g. Gold/Silver), supported WLAN operation mode (e.g. 802.11c/g/n/u/ac), capability of 3GPP/WLAN connectivity (e.g., support 3GPP and WLAN in single connection mode, support 3GPP and WLAN in dual connection mode, support 3GPP only). The access node information may include WLAN ID (e.g. SSID, BSSID, HESSID, ESSID), WLAN operation mode, WLAN measurement (e.g. RCPI and RSNI), frequency, available bandwidth, channel, 3GPP access node ID (e.g. CSG ID), measurement result of neighbouring cells, e.g. RSRP and RSRQ. In addition, the UE Report may be implemented by a new message (e.g. E-UTRAN configures UEs by LoggedMeasurementConfiguration from the Network, and UE reports to the E-UTRAN by UEInformationResponse, or by RRCConnectionSetupComplete, MeasurementReport or UEInformationResponse).

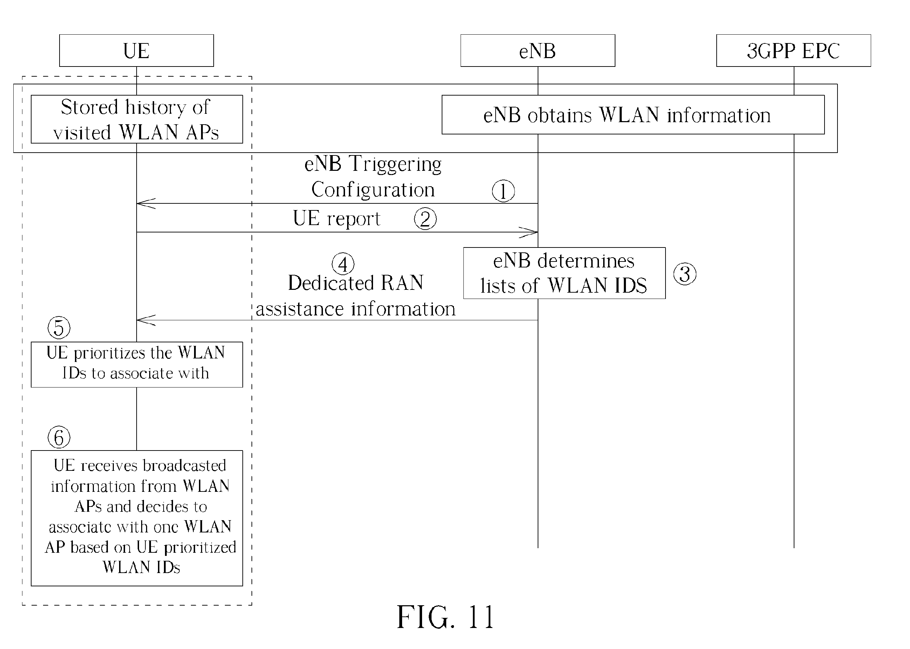

In Fig. 11, the eNB indicates the UE to provide assistance information by "eNB Triggering Configuration" (step 1). The "eNB Triggering Configuration" could be unicast, multicast, or broadcast message. When events for reporting the UE Report occur, the UE sends the UE Report to the eNB (step 2). The eNB determines lists of WLAN IDs by using information of the UE Report (step 3). And then, the eNB provides the dedicated RAN assistance information to the UE (step 4). As abovementioned, the RAN assistance information may include WLAN ID list, priority, and WLAN Information. After receiving the dedicated RAN assistance information, the UE prioritizes the WLAN IDs to associate with, e.g., by referencing the history of visited WLAN APs as well as WLAN ID list of RAN assistance information (step 5). Finally, the UE receives broadcasted information from WLAN APs and selects a WLAN AP to associate with based on UE prioritized WLAN IDs (step 6).

Note that, the elements of the UE Report could be separated into mandatory and optional. The UE's location may be useful information for the eNB to determine lists of WLAN IDs for a specific UE. The UE may only provide GPS information to the eNB if the GPS function is supported. Other elements in UE Report may be the optional.

In addition, abovementioned "eNB Triggering Configuration" may comprise: UE Report Request (an indicator to request UE to send "UE Report"); and Events to trigger UE Report (e.g. (1) WLAN RCPI (received channel power indicator) becomes better than a threshold, (2) 3GPP cell's radio quality becomes worse than threshold 1 and WLAN's radio quality becomes better than threshold 2, (3) UE changes to RRC_CONNECTED state from RRC_IDLE state). "eNB Triggering Configuration" may be implemented by RRCConnectionReconfiguration, LoggedMeasurementConfiguration, Measurement Control, or a new message. In addition, the eNB may configure UE to provide RAN assistance information by "eNB Triggering Configuration" when the UE enters the coverage of a cell, e.g. Attach, Handover, the UE hasn't reported to the network for a long period of time that exceeds a threshold, or the eNB requests UE to measure or report the radio environment in vicinity.

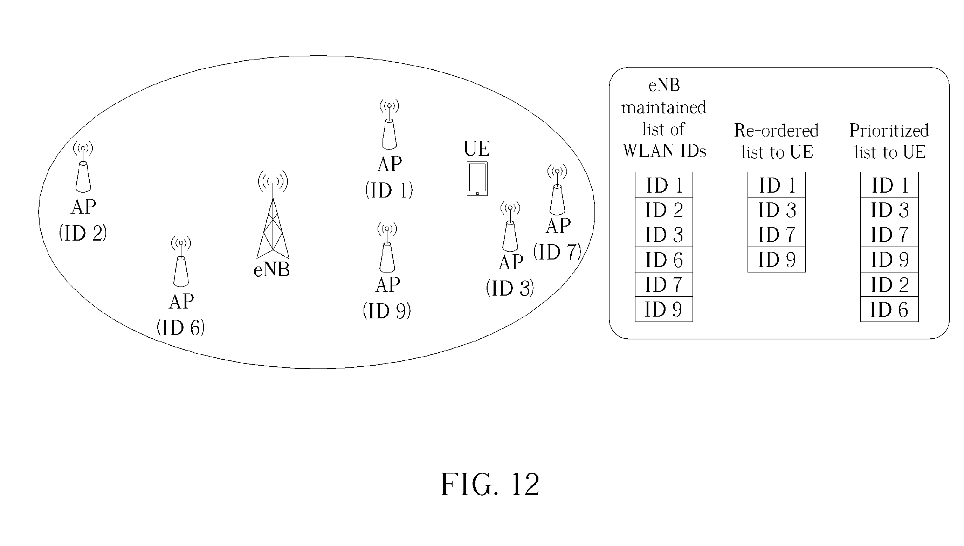

Figs. 12-14 illustrate an embodiment of eNB's behavior to prioritize WLAN APs with the UE Report. In Fig. 12, the eNB maintains a list of WLAN IDs including {ID1, ID2, ID3, ID6, ID7, ID9}. The UE reports its location in the UE Report to the eNB, e.g. GPS information. The eNB determines the list of WLAN IDs according to UE's location. Only WLAN IDs including {ID1, ID3, ID7, ID9} are provided to the UE, or prioritized WLAN IDs including {ID1, ID 3, ID7, ID9, ID2, ID6} are provided to the UE.

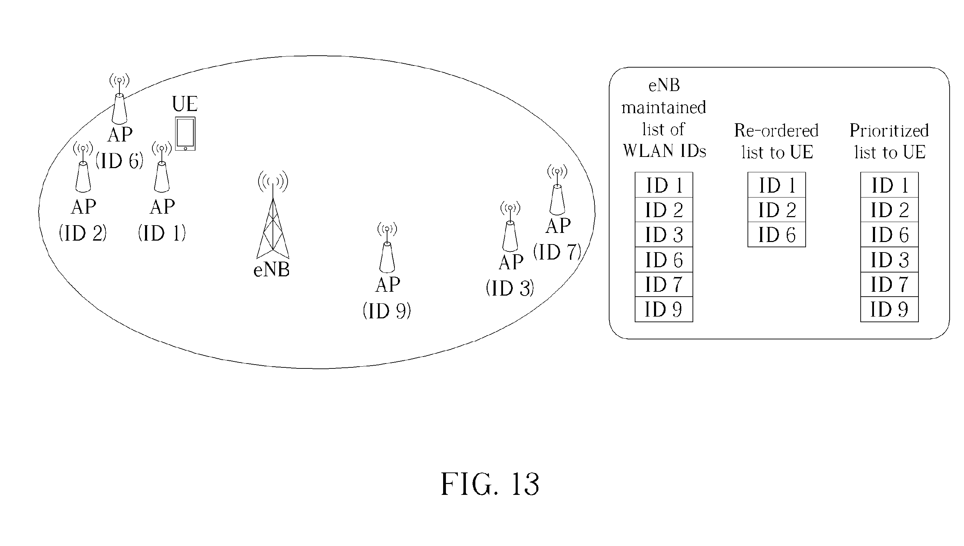

In Fig. 13, the eNB maintains a list of WLAN IDs including {ID1, ID2, ID3, ID6, ID7, ID9}. The UE reports the detected WLAN ID including {ID1}, and WLAN measurement in the UE Report to the eNB. The eNB may understand that the UE is approaching a hotspot area, and include WLAN IDs {ID1,ID2,ID6} in the RAN assistance information, based on WLAN measurement. For example, only WLAN IDs including {ID1, ID2, ID6} are provided to the UE, or prioritized WLAN IDs including {ID1, ID2, ID6, ID3, ID7, ID9} are provided to the UE.

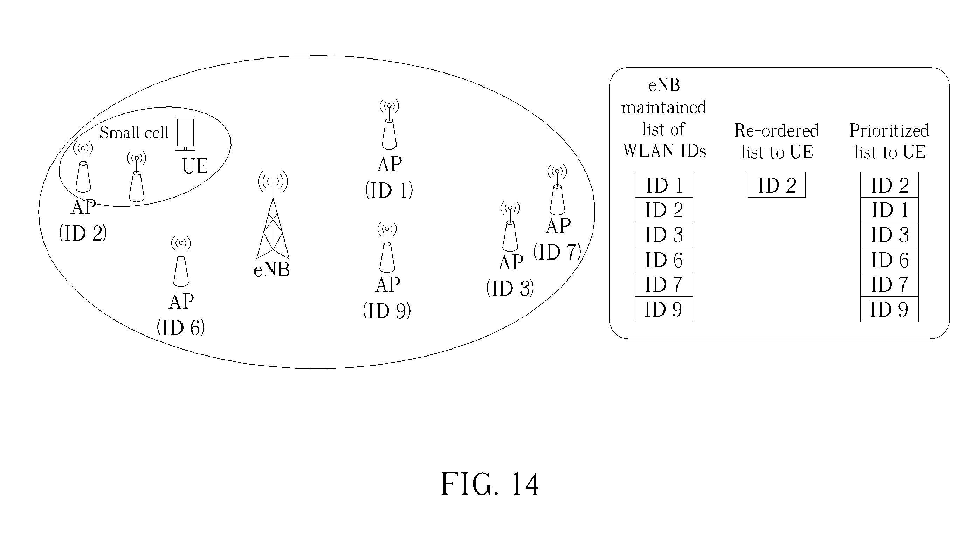

In Fig. 14, the eNB maintains a list of WLAN IDs including {ID1, ID2, ID3, ID6, ID7, ID9}. The UE reports Measurement Result (e.g. RSRP and RSRQ) in the UE Report to the eNB. The eNB may understand that the UE is in the coverage of small cell (e.g. inter-frequency cell), or the UE would be handed over to a small cell (e.g. intra-frequency cell). The eNB determines the list of WLAN IDs according to UE's Measurement Result. For example, only WLAN ID including {ID2} is provided to the UE, or prioritized WLAN IDs including {ID2, ID1, ID3, ID6, ID7, ID9} are provided to the UE.

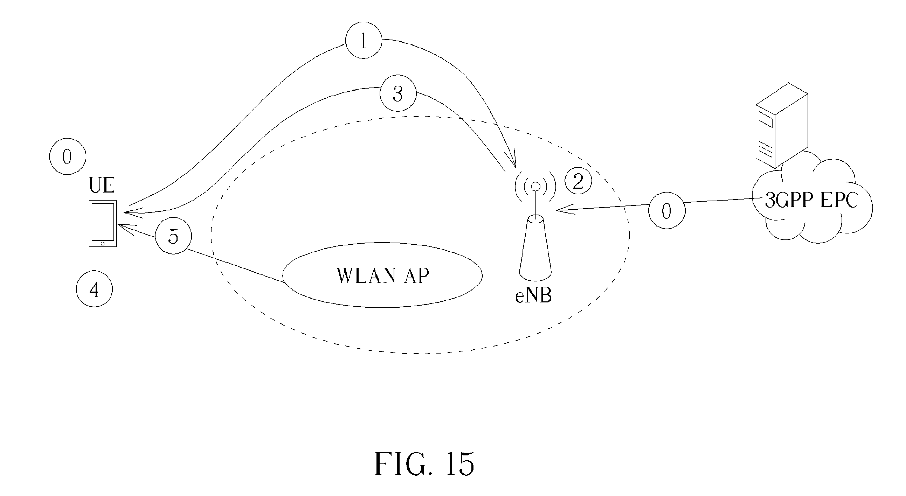

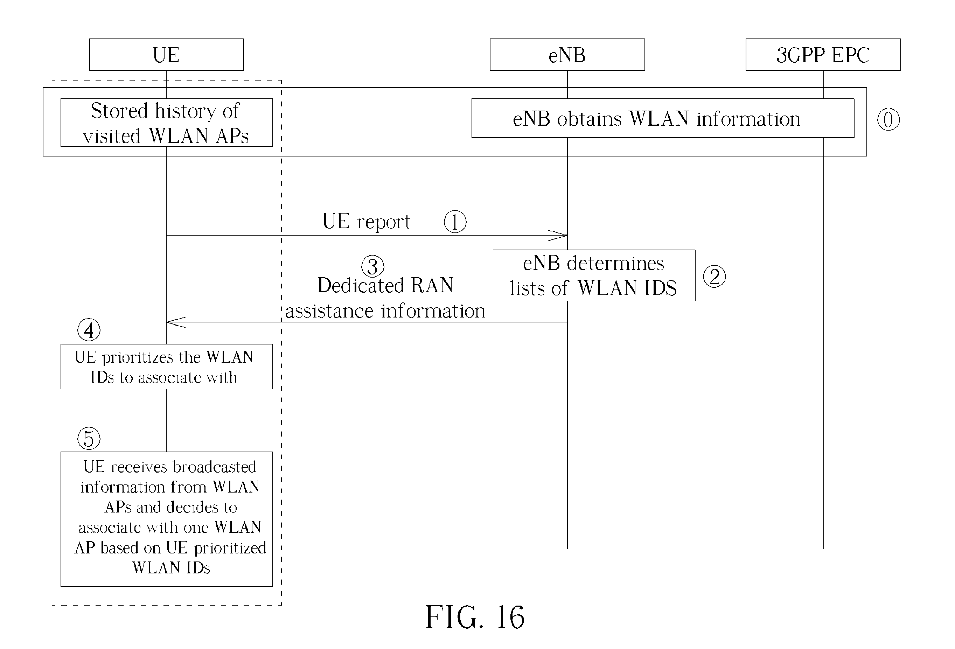

In an embodiment, as shown in Figs. 15-16, the UE may send the UE Report to the eNB periodically or in pre-determined time period or when specific event(s) occur. Compared to the embodiment of Fig. 10-11, the UE are not indicated by the eNB to transmit the UE Report to the eNB.

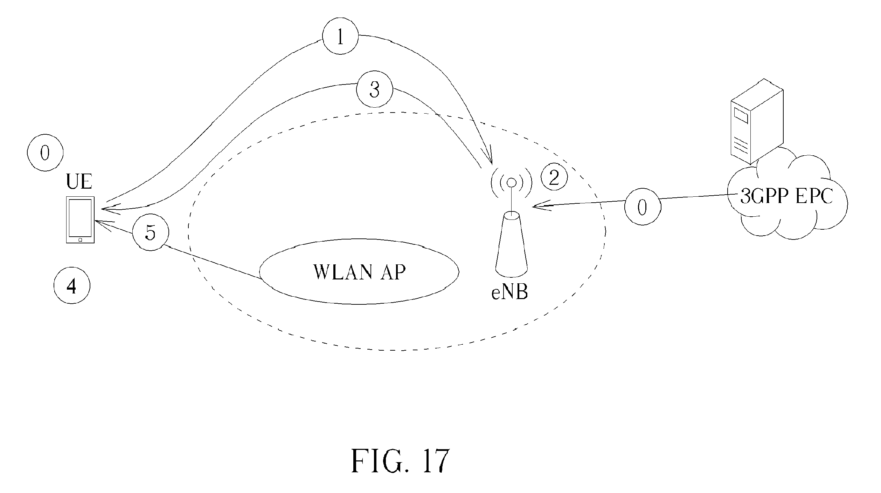

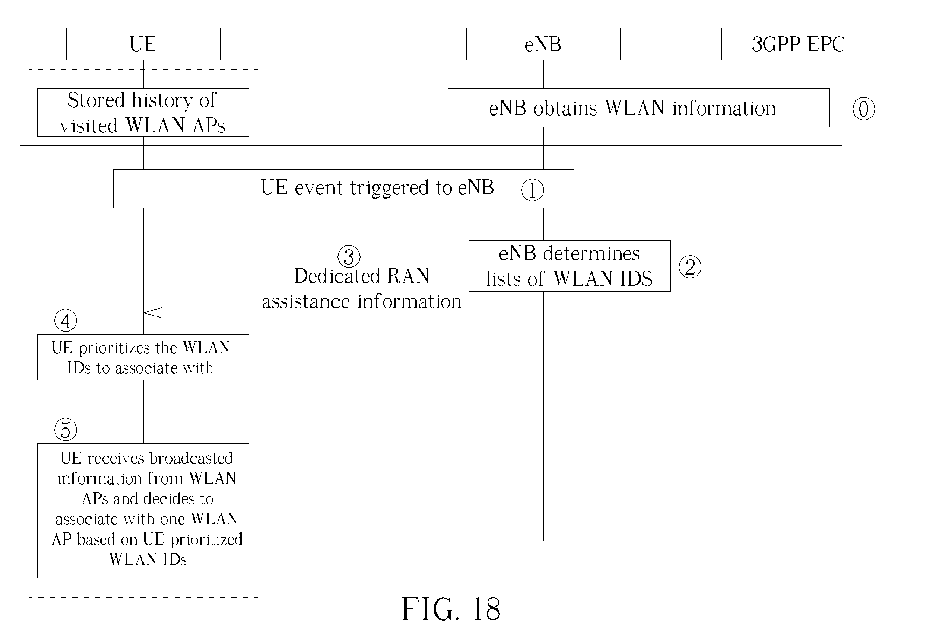

In an embodiment, as shown in Figs. 17-18, the UE sends the UE Report, here called "UE Event Triggered to eNB" including at least one of indication to indicate EPC to provide RAN assistance information for the UE, location, 3GPP access node ID (i.e. CSG ID) and WLAN ID, to the eNB. The eNB determines a list of WLAN IDs by using information of "UE Event Triggered to eNB", and then provides the dedicated RAN assistance information including the determined WLAN ID list, to the UE. Note that, based on "UE Event Triggered to eNB", the eNB could further generate reconfiguration information, e.g. the list(s) of WLAN APs for the UE to add, modify, or release, included in the dedicated RAN assistance information to the UE. For example, the eNB obtains UE's location from "UE Event Triggered to eNB". The eNB determines a list of WLAN IDs/APs that are close to the UE. Compared to the information of broadcasted RAN assistance information, the eNB reconfigures the UE to release the WLAN IDs/APs that are not close to the UE by including the WLAN IDs/APs in ReleaseAPList of the dedicated RAN assistance information.

The "UE Event Triggered to eNB" may be implemented by new message and MDT Measurement Report. "UE Event Triggered to eNB" may be triggered when a WLAN radio quality becomes better than a threshold if pre-configured, 3GPP cell's radio quality becomes worse than threshold 1 and WLAN's radio quality becomes better than threshold 2 if pre-configured, or the UE changes from RRC_IDLE state to RRC_CONNECTED state.

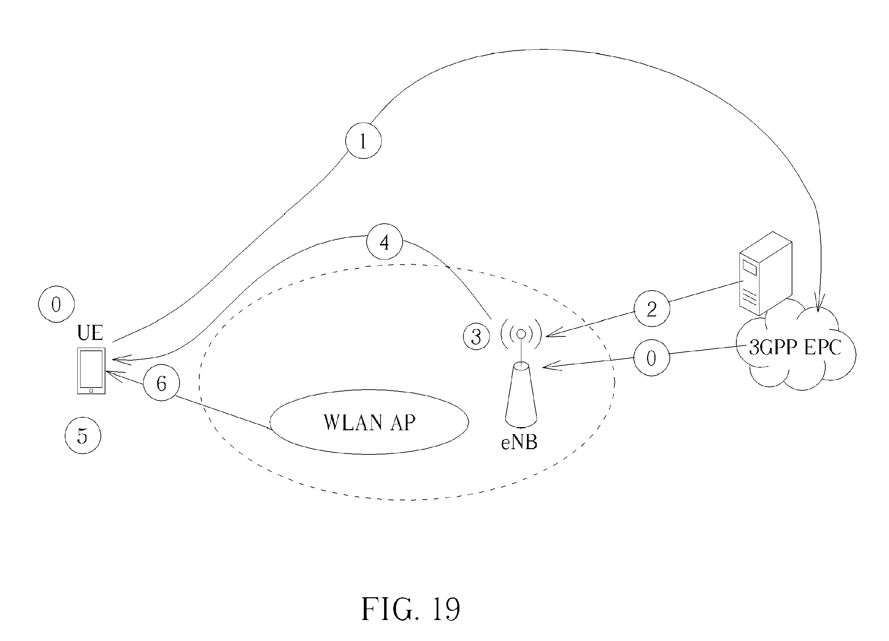

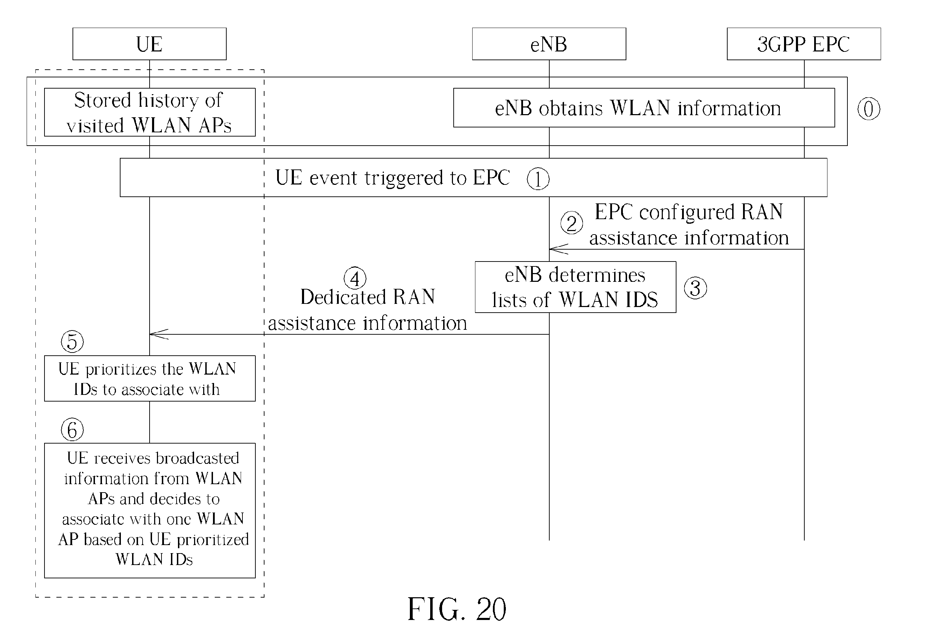

In an embodiment, as shown in Figs. 19-20, the UE sends a UE Report, here called "UE Event Triggered to EPC" including at least one of indication, location, 3GPP access node ID and WLAN ID, to the 3GPP EPC. The 3GPP EPC then sends "EPC Configured RAN assistance information" to the eNB. The eNB determines lists of WLAN IDs by using information of "EPC Configured RAN Assistance Information" and provides the dedicated RAN assistance information to the UE. Similarly, based on "EPC Configured RAN assistance information", the eNB could further generate reconfiguration information, e.g. the list(s) of WLAN APs for the UE to add, modify, or release, included in the dedicated RAN assistance information to the UE.

The abovementioned steps of the processes including suggested steps can be realized by means that could be a hardware, a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the communication device 20.

In conclusion, the present invention addresses to network detection and selection enhancement by providing a RAN assistance information with additional information to the UE. Thus, the UE can discover and select a suitable WLAN AP with reduced power consumption and time.

## Claims

1. A method of access network detection and selection for a radio access node in a wireless communication system to provide information to assist a communication device in access network detection and selection,
**characterized in that** the method comprising:
providing a radio access network (RAN) assistance information comprising a plurality of WLAN ID, priority, and WLAN information to a communication device of the wireless communication system, wherein the WLAN information comprises at least one of frequency, available bandwidth, channel, operator ID, trusted/untrusted WLAN, capability of S2a supporting, Venue, and WLAN operation mode (310).

2. The method of claim 1, **characterized in that** the RAN assistance information is provided from the radio access node to the communication device by broadcasted signaling or dedicated signaling.

3. The method of claim 1, **characterized in that** the WLAN information or the RAN assistance information is obtained from a network of the wireless communication system or collected by the radio access node.

4. The method of claim 3, further comprising:
generating the RAN assistance information according to the WLAN information from the network.

5. The method of claim 3, further comprising:
indicating the network to providing the WLAN information.

6. The method of claim 1, further comprising:
receiving a communication device assistance information from the communication device, wherein the communication device assistance information comprises at least one of a location of the communication device, subscriber class, supported WLAN operation mode, capability of 3GPP/WLAN connectivity, detected WLAN ID, WLAN measurement, 3GPP access node ID, reference signal measurement result and an indication indicating the network to send a RAN assistance information.

7. The method of claim 6, further comprising:
generating the RAN assistance information according to the communication device assistance information received from the communication device.

8. The method of claim 6, further comprising:
indicating the communication device to providing the communication device assistance information.

9. The method of claim 1, **characterized in that** the RAN assistance information further comprises at least one of added, modified, released WLAN ID.

10. A method of access network detection and selection for a communication device in a wireless communication system, **characterized in that** the method comprising:
transmitting a communication device assistance information to a network of the wireless communication system, wherein the communication device assistance information comprises at least one of a location of the communication device, subscriber class, supported WLAN operation mode, capability of 3GPP/WLAN connectivity, detected WLAN ID, WLAN measurement, 3GPP access node ID, reference signal measurement result and an indication indicating the network to send a RAN assistance information (910).

11. The method of claim 10, **characterized in that** the transmitting step comprises transmitting the communication device assistance information to the network when receiving a configuration from the network, wherein the configuration indicates the communication device to provide the communication device assistance information to the network or indicates an trigger event for transmitting the communication device assistance information to the network.

12. The method of claim 10, **characterized in that** the transmitting step comprises transmitting the communication device assistance information to the network periodically, in predetermined time period, or according to the trigger event.

13. The method of claim 10, further comprising:
receiving a RAN assistance information from the network, wherein the RAN assistance information comprises a plurality of WLAN ID, priority, and WLAN information to a communication device of the wireless communication system, wherein the WLAN information includes at least one of frequency, available bandwidth, channel, operator ID, trusted/untrusted WLAN, capability of S2a supporting, Venue, and WLAN operation mode.

14. The method of claim 13, further comprising:
prioritizing at least one WLAN ID of the WLAN access points according to the RAN assistance information; and
selecting a WLAN access point to associate with according to the prioritized WLAN IDs.
